# EUROPEAN PATENT SPECIFICATION

(11) **EP 4 220 273 B1**
(45) Date of publication and mention of the grant of the patent: **16.09.2026**
(21) Application number: 22154532.0
(22) Date of filing: 01.02.2022
(51) Int. Cl.: G02B 26/08, G02B 26/10, B81B 3/00

(54) **MICROMIRROR DEVICE FOR QUASI-STATIC MIRROR MOVEMENT AND METHOD OPERATING A MICROMIRROR DEVICE**
MIKROSPIEGELVORRICHTUNG ZUR QUASI-STATISCHEN SPIEGELBEWEGUNG UND VERFAHREN ZUM BETRIEB EINER MIKROSPIEGELVORRICHTUNG
DISPOSITIF DE MICROMIROIR POUR MOUVEMENT DE MIROIR QUASI-STATIQUE ET PROCÉDÉ DE FONCTIONNEMENT D'UN DISPOSITIF DE MICROMIROIR

(43) Date of publication of application: 02.08.2023
(73) Proprietor: Silicon Austria Labs GmbH, 8010 Graz (AT)
(72) Inventor: Piot, Adrien, 9500 Villach (AT)
(74) Representative: Wirnsberger & Lerchbaum Patentanwälte OG

(56) References cited:
- WO-A1-2021/075403
- US-A1- 2013 208 330
- US-A1- 2016 211 439
- US-A1- 2017 101 306

## Description

The invention concerns a micromirror device for quasi-static mirror movement, comprising a mirror, a first bending cantilever and a second bending cantilever, the bending cantilevers each connecting the mirror to a holder for moving, in particular pivoting, the mirror relative to the holder by elastic deformation of the bending cantilevers, wherein each of the bending cantilevers is mechanically coupled to one or more actuators, each of the actuators defining a bending segment on the respective bending cantilever, which bending segment is elastically deformable with the respective actuator upon activation of the actuator, wherein in top view of the mirror, the first bending cantilever and second bending cantilever each run at least in sections along a circumference around the mirror so that the mirror is circumferentially enclosed by the two bending cantilevers, wherein in top view of the mirror the first bending cantilever and the second bending cantilever each run spirally around the mirror at least in sections, wherein in a radial direction of the mirror the first bending cantilever and the second bending cantilever overlap each other at least in sections.

Furthermore, the invention concerns a method of operating a micromirror device for quasi-static mirror movement, wherein the micromirror device comprises a mirror, a first bending cantilever and a second bending cantilever, the bending cantilevers each connecting the mirror to a holder for moving, in particular pivoting, the mirror relative to the holder by elastic deformation of the bending cantilevers, wherein each of the bending cantilevers is mechanically coupled to one or more actuators, each of the actuators defining a bending segment on the respective bending cantilever, which bending segment is elastically deformable with the respective actuator upon activation of the actuator, wherein in top view of the mirror, the first bending cantilever and second bending cantilever each run at least in sections along a circumference around the mirror so that the mirror is circumferentially enclosed by the two bending cantilevers, wherein the first bending cantilever and the second bending cantilever each run spirally around the mirror at least in sections, wherein in a radial direction of the mirror the first bending cantilever and the second bending cantilever overlap each other at least in sections.

Micromirror devices, such as microscanners, are known from the prior art. These are usually classified as micro-opto-electro-mechanical systems (MOEMS). Micromirror devices usually have a movable mirror and an actuator system to pivot the mirror with the actuator system around one or two axes. In this way, for example, a controlled deflection of a laser beam incident on the mirror is made possible. To perform a laser beam deflection in two dimensions, systems are known which are based on deflecting a laser beam in a controlled manner successively with two mirrors, each of which can be pivoted about an axis, the axes usually being aligned at an angle to each other. In order to implement a more compact design, micromirror devices have become known which provide for pivoting of a single mirror in two dimensions, wherein the mirror often being pivotable about two pivot axes by two separately controllable actuator systems. The mirror can be driven, for example, magnetically, electrostatically or piezoelectrically.

Micromirror devices are known which are designed to move the mirror by means of resonant oscillation excitation, wherein a mirror movement with an oscillation frequency is in a range of a resonant frequency. Such mirror movement is usually referred to as resonant movement of the mirror. This type of micromirror device is often used for applications that require a high scan frequency.

Further, micromirror devices are known which are designed to move the mirror quasi-statically, with a mirror movement having an oscillation frequency far below a, usually lowest, resonance frequency. Such micromirrors usually have bending cantilevers to pivot a mirror held with the bending cantilevers by controlled bending of the cantilevers. Only small deflection angles of the mirror are commonly achievable in this case. The bending cantilevers are therefore usually formed with a spatially extended, for example meander-shaped, design in order to improve achievable deflection angles of the mirror. Such micromirror devices therefore typically have large spatial area occupancies or footprints with limited achievable deflection angles of the mirrors.

US 2017/0101306 A1 concerns a micromirror device, wherein a mirror is pivotable about two axes by piezoelectric actuators arranged on bending cantilevers in order to achieve controllable resonant oscillation about a first axis and controllable quasi-static oscillation about a second axis.

US 2013/0208330 A1 concerns a micro-mirror device, wherein a mirror is pivotable about two axes by bending beams on which piezoelectric actuators are arranged, wherein the bending cantilevers are each L-shaped folded.

US 2016/0211439 A1 concerns a multi-axis transducer comprising a platform and a plurality of beam-shaped connection members, wherein surface electrodes on the connection members can be used to harvest electrical energy, generate movement of the connection members, or measure movement of the connection members.

WO 2021/075403 A1 concerns a movable apparatus comprising a movable unit with a mirror and meander-shaped beam units for moving the movable unit, wherein beam units in an area further away from the movable unit have a higher rigidity and beam units in an area closer to the movable unit are longer.

It is an object of the invention to provide a micromirror device for quasi-static mirror movement that efficiently enables a reduced area occupancy and pronounced deflection angles of the mirror.

A further object of the invention is to provide a method of operating a micromirror device for quasi-static mirror movement that efficiently enables a reduced area occupancy and pronounced deflection angles of the mirror.

To achieve the foregoing objects, the invention provides a micromirror device for quasi-static mirror movement, comprising a mirror, a first bending cantilever and a second bending cantilever, the bending cantilevers each connecting the mirror to a holder for moving, in particular pivoting and/or translational displacing, the mirror relative to the holder by elastic deformation of the bending cantilevers, wherein each of the bending cantilevers is mechanically coupled to one or more actuators, each of the actuators defining a bending segment on the respective bending cantilever, which bending segment is elastically deformable with the respective actuator upon activation of the actuator, wherein in top view of the mirror, the first bending cantilever and second bending cantilever each run at least in sections along a circumference around the mirror so that the mirror is circumferentially enclosed by the two bending cantilevers, wherein in top view of the mirror the first bending cantilever and the second bending cantilever each run spirally around the mirror at least in sections, wherein in a radial direction of the mirror the first bending cantilever and the second bending cantilever overlap each other at least in sections, wherein in top view of the mirror, the first bending cantilever and the second bending cantilever each run around the mirror at least one and a half times, wherein the bending segments are arranged such that one or more of the bending segments of one of the bending cantilevers overlap with one or more bending segment of the other bending cantilever in a radial direction of the mirror. An overlap of the bending cantilevers in the radial direction means that a portion of one bending cantilever is arranged after a portion of the other bending cantilever in the radial direction. The portions are spaced from each other in the radial direction. The bending cantilevers are usually beam-shaped. Preferably, this applies to several, in particular essentially all radial directions of the mirror.

The described embodiment of the micromirror, in particular of an arrangement of mirror, bending cantilevers and bending segments, refers in particular to an inactive state without deformation of the bending cantilevers with the actuators.

The invention is based on the idea of optimizing a micromirror for quasi-static mirror movement in such a way that large mirror deflections are achievable, but at the same time a spatial extent of the bending cantilevers is kept small. For this purpose, it is favorable if the mirror and the bending cantilevers are arranged such that the largest possible fill factor is achieved in top view of the mirror. The fill factor usually describes an area occupancy or area overlap of an area onto which the components of the micromirror device are arranged. The actuators are capable of elastically deforming bending segments on the respective bending cantilever in order to implement a controlled elastic deformation of the respective bending cantilever. Thus, the mirror can be moved to a certain adjustment position of the mirror. This allows the mirror to be moved, in particular pivoted, quasi-statically in a controlled manner relative to the holder. The elastic deformation of the bending cantilever can be elastic bending and/or elastic torsion of the bending cantilever. A spatial extent of the bending cantilevers can be reduced if, in top view of the mirror, they each run around the mirror or at least in sections along a circumference around the mirror so that the mirror is circumferentially enclosed by the two bending cantilevers. This enables both a large longitudinal extension of the bending cantilevers and a small possible overall size of the bending cantilevers to be achieved.

Preferably, the mirror is circumferentially enclosed by both the first bending cantilever and the second bending cantilever. By an overlap of the bending cantilevers in the radial direction of the mirror, efficient deformation of the bending cantilevers can be implemented with small spatial extent at the same time. This allows the implementation of a small footprint. This applies in particular if the first bending cantilever and second bending cantilever each have a bending segment on overlapping portions of the bending cantilevers. The bending cantilevers are usually strip-shaped with a longitudinal extension that runs along the circumference around the mirror.

The mirror has a reflective mirror surface such that a beam of electromagnetic radiation, in particular a beam of light, incident on the mirror surface can be deflected by the mirror surface. By moving the mirror, the light beam can be deflected in a controlled manner with the mirror surface. The beam of electromagnetic radiation, in particular the beam of light, can be a laser beam. The mirror surface can be capable of reflecting the beam of electromagnetic radiation impinging on it for the most part, in particular substantially completely. The mirror is designed as a micromirror.

Top view, in particular of the micromirror device or mirror, refers in particular to a view along a mirror axis which is aligned orthogonally to a mirror plane in which the mirror, in particular the mirror surface, is lying without elastic deformation of the bending cantilevers by the actuators or without activation of the actuators. The top view is usually a view against the mirror surface. The circumference around the mirror lies usually in the mirror plane. Radial direction of the mirror refers to a direction orthogonal to the mirror axis. The mirror axis preferably runs through a center of the mirror, especially of the mirror surface.

Preferably, in top view of the mirror at an angle defined by the mirror center of the mirror as the angular vertex, the first bending cantilever and second bending cantilever each extend along an angular range of more than 180°, in particular more than 216°, preferably more than 270°, in particular preferably entirely, around the mirror. A large longitudinal extension of the respective bending cantilever usually corresponds to a large movement capability of the mirror. The angle is usually in the plane of the mirror. In top view of the mirror, the first bending cantilever and the second bending cantilever each run around the mirror at least one and a half times, in particular multiple times. For example, the first bending cantilever and/or the second bending cantilever may run around the mirror 2 times to 8 times.

In top view of the mirror, the first bending cantilever and the second bending cantilever each run spirally around the mirror at least in sections, wherein preferably the first bending cantilever and second bending cantilever preferably forming intertwined spirals. The first bending cantilever and second bending cantilever can each form a spiral running around the mirror, the spirals being intertwined with each other such that in the radial direction of the mirror one or more portions of the spiral of the first bending cantilever and one or more portions of the spiral of the second bending cantilever overlap each other periodically, in particular alternately. Preferably, this applies to several, in particular essentially all radial directions of the mirror. The portions of the spirals are usually arranged at a distance from each other in the radial direction. The respective spiral runs around the mirror one and a half times. In this way, a particularly high fill factor can be realized. The respective spiral may be shaped substantially corner-free, for example circular or elliptical, or may be shaped substantially angular, for example rectangular or square. The angular shaped spiral can be formed with several straight spiral segments adjoining one another, wherein directly adjoining spiral segments are angled to one another, preferably with an angle of 90°. Preferably, the bending cantilevers can each be formed with or as angularly shaped spirals if the mirror is angularly shaped, in particular rectangular or square. The bending cantilevers can each be formed with or as corner-free shaped spirals if the mirror is circular or elliptical in shape. A shape of the bending cantilevers, spirals and/or mirror typically refers to a top view of the mirror.

Usually, in top view, the first bending cantilever and the second bending cantilever are connected to the mirror at different points on the mirror, in particular opposite to each other on the mirror. A first end of the respective bending cantilever can be connected to the holder and a second end of the respective bending cantilever can be connected to the mirror, in particular to the mirror plate of the mirror. The first and second ends of the respective bending cantilever usually refer to ends of the bending cantilever opposite to each other in the longitudinal direction of the respective bending cantilever. The respective ends are typically rigidly connected to the holder and/or the mirror. Usually, the first ends and/or the second ends of the bending cantilevers are arranged opposite each other respectively to the mirror. The holder is usually designed as a frame, which encloses the mirror and/or the bending cantilevers. The frame is usually plate-shaped. The second ends may be connected to the mirror such that a straight line passing through the center of the mirror connects the two second ends. Preferably, the straight line is a diagonal of the mirror running through the center of the mirror, especially if the mirror is quadrangular. Preferably, the first ends and second ends lie substantially on the straight line.

The actuators can each be formed with a, especially as, piezoelectric element in order to elastically deform, in particular bend, the respective bending segment with the piezoelectric element of the respective actuator. By activating the piezoelectric element, by applying a control signal, in particular a control voltage, to the piezoelectric element the respective bending segment can be elastically deformed, in particular bent, with the piezoelectric element. The actuators are then referred to as piezoelectric actuators. Piezoelectric actuators can deform the bending segments particularly efficiently. The actuators can be arranged on the respective bending cantilever or can be formed as part of it.

Multiple of the actuators may have a common piezoelectric layer on which electrical electrodes separated from each other are disposed to form the respective piezoelectric element. One of the electrodes of each of the piezoelectric actuators can then be arranged on the piezoelectric layer, electrically separated from one another to separately control the piezoelectric actuators. For this purpose, first electrodes of different piezoelectric actuators can be arranged at a distance from each other on one of the sides of the piezoelectric layer in order to form a piezoelectric element with a second electrode of the respective piezoelectric actuator arranged on the other side of the piezoelectric layer. Such spaced electrodes on the same side of a common piezoelectric layer are also referred to as segmented electrodes. The first electrodes are usually spaced apart along the common piezoelectric layer. The respective second electrodes of the piezoelectric actuators can also be arranged at a distance from each other or preferably be designed as a common second electrode. The piezoelectric actuators of the first bending cantilever may be formed with a common piezoelectric layer and/or the piezoelectric actuators of the second bending cantilever may be formed with a common piezoelectric layer. An average distance between segmented electrodes or directly adjacent electrodes on the same side of the common piezoelectric layer, also referred to as segmentation distance, can be between 5 µm and 100 µm, in particular between 10 µm and 60 µm. Preferably, in top view of the mirror against the mirror surface of the mirror, the first electrodes are arranged in front of the second electrodes. Usually, the respective first electrode is then referred to as the top-electrode and the respective corresponding second electrode as the bottom-electrode.

Usually, at least one of the bending segments is defined, in particular formed, by one of the respective piezoelectric actuators. In particular, the bending segment can be formed with the piezoelectric material of a respective piezoelectric actuator and/or be a portion of a base structure of the respective bending cantilever to which the piezoelectric material of the respective piezoelectric actuator is mechanically connected. The piezoelectric actuator can, for example, be applied to the base structure of the respective bending cantilever.

The first bending cantilever and/or the second bending cantilever may each have multiple, preferably strip-shaped, bending segments arranged along a longitudinal direction of the respective bending cantilever around the mirror. The longitudinal direction of the respective bending cantilever usually corresponds to a running direction of the bending cantilever in which the bending cantilever runs around the mirror. Longitudinal extension usually refers to an extension of the bending cantilever along the longitudinal direction.

The bending segments are usually strip-shaped with a longitudinal extension of the bending segments along a longitudinal direction of the respective bending cantilever. Typically, each of the bending cantilevers has multiple of bending segments along a longitudinal extension of the respective bending cantilever. Preferably, bending segments are arranged on the respective bending cantilever along a major part, in particular more than 75%, preferably more than 90%, in particular preferably substantially an entirety, of the longitudinal extension of the bending cantilever. Usually, at least one bending segment is arranged along a width extension of the respective bending cantilever on a predominant part, in particular more than 75%, preferably more than 90%, in particular preferably essentially an entirety, of the width extension of the bending cantilever. Along the width extension, one or more bending segments may be arranged. The width extension is usually orthogonal to the length extension. The design and arrangement of the bending segments usually refers to a top view of the mirror. An area occupancy of the bending cantilevers with bending segments usually corresponds to a deflection capability of the respective bending cantilever. The above refers in particular to a top view of the mirror.

In top view of the mirror, on each half side defined by a first arrangement axis through the center of the mirror, at least one bending segment may be arranged on the first bending cantilever and/or at least one bending segment may be arranged on the second bending cantilever. Preferably, the first arrangement axis extends in top view through the point on the mirror at which the first bending cantilever is connected to the mirror and a point on the mirror at which the second bending cantilever is connected to the mirror. Typically, multiple bending segments are arranged on the respective bending cantilever on each half side. Preferably, each portion of the bending cantilever running through one of the half-sides is configured in this manner, in particular with at least one or more bending segments on the respective portion of the bending cantilever. Typically, the first arrangement axis is aligned substantially parallel to the mirror plane.

In top view of the mirror, at least one bending segment can be arranged on the first bending cantilever and/or the second bending cantilever in each quadrant defined by the first arrangement axis and a second arrangement axis orthogonal to the first arrangement axis, the arrangement axes running through the center of the mirror. The bending segments in the different quadrants on the respective bending cantilever are thereby usually different bending segments, which in particular can be deformed separately from one another with the actuators. Preferably, the bending segment in the respective quadrant extends along a major part, in particular substantially entirely along, a longitudinal extension of a portion of the respective bending cantilever running through the quadrant. The first bending cantilever and/or second bending cantilever may each include multiple portions extending through the respective quadrant, with at least one bending segment disposed on each of the portions. For example, the first bending cantilever and/or second bending cantilever can each run spirally around the mirror so that in one or more of the quadrants there are multiple portions of the respective bending cantilever, which preferably each have at least one bending segment of their own. Typically, the first arrangement axis and/or second arrangement axis are aligned substantially parallel to the mirror plane.

The bending segments are arranged such that, in top view, one or more of the bending segments of one of the bending cantilevers overlap with one or more bending segment of the other bending cantilever in a radial direction of the mirror. This allows efficient control of a movement of the mirror. This is typically done by having one or more portions of the first bending cantilever and one or more portions of the second bending cantilever overlap each other in the radial direction, which have corresponding bending segments. Multiple bending segments of one of the bending cantilevers may overlap with multiple bending segments of the other bending cantilever in the radial direction. Preferably, the bending segments of one bending cantilever and the bending segments of the other bending cantilever are arranged to overlap each other alternately in the radial direction according to a periodic ordering scheme. For example, one bending segment of the first bending cantilever and one bending segment of the second bending cantilever can be arranged alternately after each other in the radial direction, or vice versa.

Usually, by activation, in particular control, of different ones of the actuators, different types of movements, in particular different types of adjustment positions, of the mirror can be adjusted, for example a pivoting of the mirror about different pivot axes of the mirror or, for example, alternatively or cumulatively a translational displacement of the mirror, in particular in a direction orthogonal to the mirror surface. Multiple sets of bending segments may be provided, wherein each set comprises at least one bending segment of the first bending cantilever and at least one bending segment of the second bending cantilever, wherein with activation of the actuators of the bending segments of a respective one of the sets, a type of adjustment positions is adjustable. The actuators of bending segments of a respective set are usually electrically connected to each other in order to control them with a same control signal.

Preferably, the mirror is pivotable about different pivot axes by activating different of the actuators. Preferably, the mirror is pivotable about a first pivot axis and/or a second pivot axis, wherein the second pivot axis is oriented at an angle, in particular orthogonally, to the first pivot axis. Multiple sets of bending segments may be provided, each set having at least one bending segment of the first bending cantilever and at least one bending segment of the second bending cantilever, wherein upon activation of the actuators of the bending segments of a respective one of the sets, the mirror is pivotable about a respective pivot axis. Preferably, with activation of actuators of different sets, the mirror is pivotable about different, preferably mutually orthogonal, pivot axes. The pivot axes preferably pass through the center of the mirror, especially in top view. The pivot axes are usually oriented orthogonally to the mirror axis. For example, activation of the bending segments of a first set of bending segments can pivot the mirror about a first pivot axis, and activation of the bending segments of a second set of bending segments can pivot the mirror about a second pivot axis. The first pivot axis and second pivot axis are preferably orthogonal to each other. This way, mirror pivoting can be implemented in two dimensions.

The bending segments of the respective set can be arranged such that they overlap each other in a radial direction of the mirror. This enables particularly efficient control of the mirror. Preferably, the bending segments of the respective set can have one or more bending segments of the first bending cantilever and one or more bending segments of the second bending cantilever, which are arranged to overlap each other in a radial direction of the mirror in the aforementioned manner. Typically, the bending segments of different sets are arranged overlapping each other in different radial directions of the mirror. Usually, the actuators of a respective set are connected to the same electrical control lines in order to activate the actuators with a same control signal, in particular a control voltage.

To activate the respective actuator, the actuator can usually be controlled with an electrical control signal, in particular an electrical control voltage. A strength of the control signal usually corresponds to a strength of an elastic deformation, in particular bending, of the respective bending segment. The actuators may be connected to electrical control lines in order to control the actuators with the electrical control signal via the control lines. Usually, different actuators are connected to different electrical control lines to drive them with different control signals. Several actuators can be connected to the same electrical control lines in order to apply the same control signal to the actuators. The actuators of different sets, for example of the first set and second set, can be controlled with the same or different control signals. The control signals can be control voltages, especially in the case of piezoelectric actuators.

Usually, the micromirror device has electrical connection ports to apply control signals, in particular control voltages, to the micromirror device via the connection ports to activate, in particular to control, the actuators. A respective connection port is usually electrically connected to the actuators via one or more electrical control circuits in order to apply the control signal to the actuators. Typically, each actuator or each set is associated with one of the connection ports. The connection ports are typically located on the holder. The connection port may have one or more electrical contact surfaces that can be electrically contacted to transmit an electrical signal, in particular an electrical control voltage. Each actuator may be electrically connected to two of the connection ports to form an electrical control circuit. Typically, one of the connection ports can be a ground port. All actuators can be electrically connected to the ground port and to a further one of the connection ports configured as a control port in order to form an electrical control circuit for activating, in particular controlling, the respective actuator. The actuators of different sets are usually electrically connected to different connection ports for activating the actuators.

Typically, the first bending cantilever and/or the second bending cantilever each has at least one arrangement row of bending segments, the arrangement row being formed with multiple bending segments arranged in a row in the longitudinal direction of the bending cantilever. In top view, the first bending cantilever and/or the second bending cantilever may each have at least one portion comprising multiple bending segments in the width direction of the respective bending cantilever. Preferably, the first bending cantilever and/or the second bending cantilever may have multiple arrangement rows of bending segments along the width direction, wherein each arrangement row is formed with a multiple number of bending segments arranged in a row in the longitudinal direction of the bending cantilever. The width direction of the respective bending cantilever is usually aligned orthogonally to the longitudinal direction of the respective bending cantilever. The respective arrangement row may extend over a major portion, preferably substantially an entire longitudinal extent, of the respective bending cantilever.

The mirror is designed as a micromirror. The mirror usually has an average length from 250 µm to 8000 µm, especially between 500 µm and 5000 µm. The mirror surface is usually substantially planar in shape. The mirror surface can be curved, in particular concave or convex. The mirror and/or the mirror surface may be substantially corner-free, in particular circular or elliptical in shape. Alternatively, the mirror and/or mirror surface may be polygonal in shape, in particular rectangular or square. The mirror usually comprises a mirror plate on which the mirror surface is disposed. The mirror plate can have a thickness between 3 µm and 100 µm, in particular between 10 µm and 50 µm. Typically, the mirror plate is substantially formed with or from a monocrystalline or polycrystalline material, for example silicon. The mirror surface is usually formed with, especially from, a metal layer. The metal layer is preferably formed essentially with or from platinum, silver, aluminum and/or gold. In addition, the mirror surface can have an adhesion layer, which can be formed with, especially from, titanium (Ti) or chromium (Cr). An average thickness of the mirror surface or metal layer is usually between 100 nm and 2000 nm, in particular between 50 nm and 500 nm. The mirror is usually plate-shaped.

The first and/or second bending cantilever can each have a thickness of 3 µm to 100 µm, in particular 10 µm to 50 µm. The thickness is usually measured in a direction parallel to the mirror axis. Along the longitudinal extension of the respective bending cantilever, the bending cantilever can have a length of 250 µm to 20000 µm, in particular of 500 µm to 10000 µm. A width of the respective bending cantilever may be from 100 µm to 1000 µm, in particular from 200 µm to 600 µm. The width of the respective bending cantilever is usually measured in top view orthogonal to a longitudinal direction of the bending cantilever. In top view, in a radial direction of the mirror, a gap distance between directly overlapping, i.e. usually directly behind each other arranged, portions of the bending cantilevers can be from 10 µm to 200 µm, in particular from 30 µm to 100 µm. Gap distance usually refers in top view to a distance measured in a radial direction of the mirror between two portions of the bending cantilevers directly adjacent to each other in the radial direction.

Usually, the first bending cantilever and/or second bending cantilever each has a base structure to which the respective actuators are mechanically coupled in order to elastically deform, in particular elastically bend, the bending cantilever when the actuators are activated, in particular controlled. The base structure can be formed with or from a monocrystalline or polycrystalline material, for example silicon. The respective actuator may be connected to or applied to the base structure. The respective actuator may be applied to or formed as part of the respective bending cantilever.

If the actuator is a piezoelectric actuator, the piezoelectric layer of the piezoelectric actuator usually has a thickness of 1 µm to 5 µm, in particular of 2 µm to 4 µm. The piezoelectric layer is usually formed of piezoelectric material. The piezoelectric material can be formed with or of, for example, lead-zirconate-titanate (PZT) or aluminum-nitride (AIN) or Al(X)N, wherein X is preferably Scandium. The piezoelectric layer can be applied to the base structure of the respective bending cantilever. The piezoelectric layer is usually arranged between two electrodes to form the piezoelectric element of the respective piezoelectric actuator. Preferably, one of the electrodes of the piezoelectric element is disposed on a first side of the base structure on the base structure and the other electrode of the piezoelectric element is disposed on a second side of the base structure opposite to the first side, wherein the piezoelectric layer is disposed between the base structure and one of the electrodes to form the piezoelectric element. Alternatively, the piezoelectric element may be disposed on one side of the base structure.

The electrodes, in particular the top-electrode and bottom-electrode, of the respective piezoelectric element are formed with or from electrically conductive material, in particular metal, for example platinum, gold or iridium. The electrodes of the respective piezoelectric actuator typically form electrode layers between which piezoelectric material, especially a piezoelectric layer, is disposed so that a piezoelectric element is formed. An average thickness of the electrode layers is usually of 100 nm to 400 nm, in particular of 200 nm to 300 nm. The respective bending segment can be formed with or by the piezoelectric element, in particular its piezoelectric material, especially its piezoelectric layer. It is advantageous if at least one of the electrodes of the piezoelectric element or piezoelectric actuator has a first sublayer, which is formed in the aforementioned manner, and a second sublayer, formed with or from, for example, titanium (Ti) or chromium (Cr), the first sublayer being applied to the second sublayer. The second sublayer may then provide an adhesion layer to increase an adhesion of the electrode to an underground on which the electrode is deposited. The underground is typically formed with or by the piezoelectric layer.

In top view, the bending segment can have a longitudinal extension of 62.5 µm to 5000 µm and/or a width extension of 100 µm to 1000 µm. Accordingly, one and/or both electrodes of the piezoelectric element of the respective piezoelectric actuator can have such dimensions. A distance between directly adjacent bending segments on the respective bending cantilever can be of 5 µm to 100 µm, in particular of 10 µm to 60 µm.

The electrical contact surfaces of the connection ports can have a longitudinal extent and/or width extent of 50 µm to 600 µm in top view. The contact surfaces are usually a surface of a contact surface layer. The contact surface layer preferably has a thickness of 50 nm to 300 nm. The contact surface layer can, for example, be formed with or by platinum, gold or iridium-oxide, in particular IrO₂. It is advantageous if the connection port has an adhesion layer to increase an adhesion of the contact surface layer to a substrate on which the connection port is deposited. The contact surface layer can be applied to the adhesion layer. The adhesion layer can be formed with or from, for example, titanium (Ti) or chromium (Cr).

Generally, the first bending cantilever, second bending cantilever and/or mirror are essentially plate-shaped, especially in a state of not being deformed with the actuators. In a state of not being deformed with the actuators, the first bending cantilever and second bending cantilever can each be arranged to extend essentially in a plane, in particular the same plane. The plane can be the mirror plane.

In a further aspect, the invention comprises a method of operating a micromirror device for quasi-static mirror movement, wherein the micromirror device comprises a mirror, a first bending cantilever and a second bending cantilever, the bending cantilevers each connecting the mirror to a holder for moving, in particular pivoting and/or translational displacing, the mirror relative to the holder by elastic deformation of the bending cantilevers, wherein each of the bending cantilevers is mechanically coupled to one or more actuators, each of the actuators defining a bending segment on the respective bending cantilever, which bending segment is elastically deformable with the respective actuator upon activation of the actuator, wherein in top view of the mirror, the first bending cantilever and second bending cantilever each run at least in sections along a circumference around the mirror so that the mirror is circumferentially enclosed by the two bending cantilevers, wherein the first bending cantilever and the second bending cantilever each run spirally around the mirror at least in sections, wherein in a radial direction of the mirror the first bending cantilever and the second bending cantilever overlap each other at least in sections, wherein in top view of the mirror, the first bending cantilever and the second bending cantilever each run around the mirror at least one and a half times, wherein the bending segments are arranged such that, one or more of the bending segments of one of the bending cantilevers overlap with one or more bending segment of the other bending cantilever in a radial direction of the mirror, wherein at least one bending segment of the first bending cantilever and at least one bending segment of the second bending cantilever are elastically deformed by activation of the respective actuator in order to move, in particular to pivot and/or translational displace, the mirror. As mentioned above, this allows a reduced area occupancy and a pronounced deflection angle of the mirror to be efficiently achieved. A movement, especially pivoting and/or translational displacing, of the mirror is usually quasi-static, also referred to as non-resonant mirror-control.

The bending segments can be arranged such that in the radial direction of the mirror one or more of the bending segments of the first bending cantilever overlap with one or more bending segments of the second bending cantilever, whereby the actuators of the overlapping bending segments are activated time-parallel to move the mirror. Thus, an efficient control of the mirror movement is achievable.

Preferably, the mirror is pivotable about different pivot axes by activation of different ones of the actuators, in particular about a first pivot axis and/or a second pivot axis which is oriented orthogonally to the first pivot axis. Multiple sets of bending segments may be provided, each set comprising one or more bending segments of the first bending cantilever and one or more bending segments of the second bending cantilever, wherein by activating the actuators of the bending segments of different sets the mirror is pivoted about different, in particular mutually orthogonal, pivot axes. Upon activation of the actuators of the bending segments of the respective set, the mirror can be pivotable about a respective one of the pivot axes.

The actuators of the bending segments of the respective set can be controlled with the same control signal for activation. The actuators of different sets, for example of the first set and second set, can be controlled with the same or different control signals. The control signals can be control voltages, especially in the case of piezoelectric actuators.

A described embodiment of the micromirror device, in particular of an arrangement of the mirror, the bending cantilevers and/or bending segments, refers in particular to an inactive state without deformation of the bending cantilevers with the actuators. The described embodiment usually refers to a top view of the mirror, especially along the mirror axis.

The invention will now be described by way of example with reference to the accompanying drawings, in which:
Fig. 1 shows a micromirror device with an angular mirror in top view, with two bending cantilevers, each formed as angular spirals, running around the mirror;
Fig. 2 shows a further micromirror device, which is not covered by the subject-matter of the claims, with a circular mirror in top view, with two bending cantilevers, each formed as corner-free shaped spiral, running around the mirror;
Fig. 3 and Fig. 4 show the micromirror device of Fig. 1, wherein tilting of the mirror about a first pivot is demonstrated;
Fig. 5 and Fig. 6 show the micromirror device of Fig. 1, wherein tilting of the mirror about a second pivot axis is demonstrated;
Fig. 7 and Fig. 8 show the micromirror device of Fig. 1, wherein tilting of the mirror about a first pivot axis and a second pivot axis is demonstrated;
Fig. 9 and Fig. 10 show a further micromirror device, wherein translation displacement of the mirror is demonstrated;
Fig. 11 and Fig. 12 show the micromirror device of Fig. 2, wherein tilting of the mirror about a first pivot axis is demonstrated;
Fig. 13 and Fig. 14 show the micromirror device of Fig. 2, wherein tilting of the mirror about a second pivot axis is demonstrated;
Fig. 15 and Fig. 16 show the micromirror device of Fig. 2, wherein tilting of the mirror about a first pivot axis and a second pivot axis is demonstrated;
Fig. 17 and Fig. 18 show the micromirror device of Fig. 2, wherein translation displacement of the mirror is demonstrated.

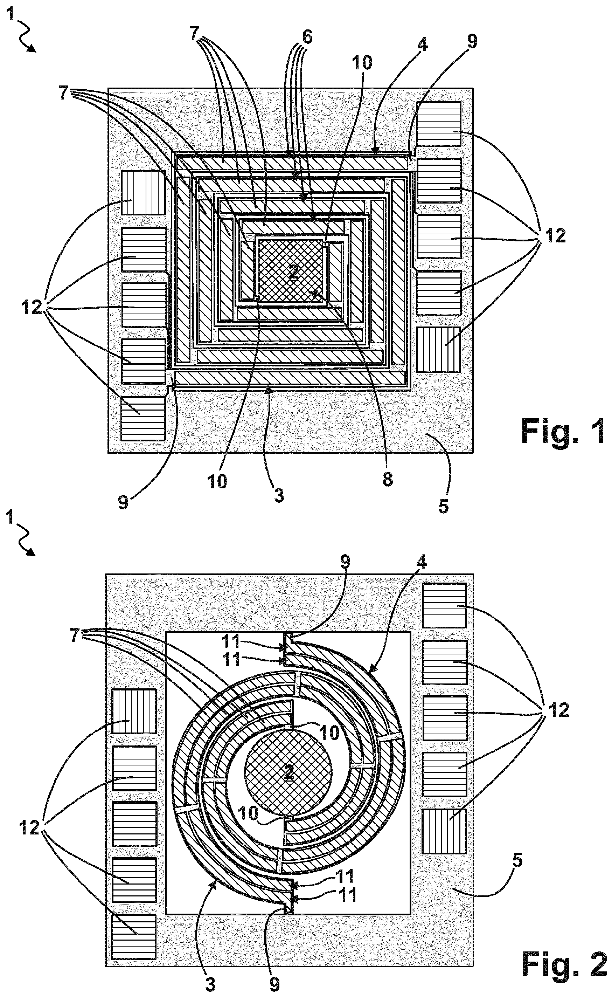

Fig. 1 shows a schematic illustration of a micromirror device 1 for quasi-static mirror movement in a top view of the micromirror device 1. The micromirror device 1 has a mirror 2, a first bending cantilever 3, a second bending cantilever 4 and a holder 5, the bending cantilevers 3, 4 each connecting the mirror 2 to the holder 5 in order to move the mirror 2 relative to the holder 5 by elastic deformation of the bending cantilevers 3, 4. The bending cantilevers 3, 4 each run spirally around the mirror 2, with a first end 9 of each of the bending cantilever 3, 4 connected to the holder 5 and a second end 10 of each of the bending cantilevers 3, 4 connected to the mirror 2. The mirror 2 has a mirror surface 8 for moving the mirror surface 8 in a controlled manner with controlled deformation of the bending cantilevers 3, 4. The first bending cantilever 3 and the second bending cantilever 4 are typically deformable substantially separately from each other. The holder 5 is usually designed as a frame that encloses the mirror 2 and/or the bending cantilevers 3, 4. For example, the frame may be substantially circular, elliptical, rectangular or square in top view of the mirror.

The first bending cantilever 3 and the second bending cantilever 4 each form a spiral which runs several times around the mirror 2, the spirals being intertwined such that, in the radial direction of the mirror 2, one or more portions of one spiral overlap one another with one or more portions of the other spiral. Preferably, the portions of one spiral and the portions of the other spiral overlap each other periodically, in particular alternately, in the radial direction. Preferably, this applies to several, in particular substantially all, radial directions of the mirror 2. The portions of the spirals are arranged spaced apart from one another in the radial direction of the mirror 2 after one another.

The respective spiral can be designed as a quadrangular, in particular rectangular or square, spiral, exemplarily shown in Fig. 1. Preferably, the mirror 2 is then also quadrangular, in particular rectangular or square. The respective spiral can be designed as corner-free, in particular essentially circular or elliptical, spiral, exemplarily shown in Fig. 2. Preferably, the mirror 2 is then also designed corner-free, in particular circular or elliptical. In this way, a high fill factor can be achieved.

Top view usually refers to a view along a mirror axis which, in a non-moving, in particular non-tilted, position of the mirror 2, is aligned essentially orthogonally to the mirror surface 8 of the mirror 2 through a mirror center. Radial directions of the mirror 2 are usually orthogonal to the mirror 2 axis. A description of a spatial arrangement of components of the micromirror device 1, in particular the mirror 2, the bending cantilevers 3, 4 and/or bending segments 7, usually refers to the top view.

The second ends 10 are preferably connected to the mirror 2 at opposite points of the mirror 2. If the mirror 2 is rectangular or square, the second ends 10 are usually connected to the mirror 2 in such a way that a straight line passing through the center of the mirror 2 connects the two seconds ends 10. Preferably, the straight line is a diagonal of the mirror 2 running through the center of the mirror 2. Typically, the first ends 9 are arranged opposite each other with respect to the mirror 2 and are each connected to the holder 5. Preferably, the first ends 9 and second ends 10 lie substantially on the straight line.

Each of the bending cantilevers 3, 4 has multiple actuators 6, each actuator 6 defining a bending segment 7 on the respective bending cantilever 3, 4, which is elastically deformable when the actuator 6 is activated, in particular controlled. In Fig. 1 and Fig. 2, the bending segments 7 are shown with oblique hatching. In this way, by controlling the actuators 6, the bending segments 7 can be deformed in a controlled manner to move the mirror 2. The actuators 6 are preferably designed as piezoelectric actuators 6, each actuator 6 being designed as a piezoelectric element. Each piezoelectric element typically comprises a piezoelectric layer disposed between two electrodes. The respective bending segment 7 may be formed by the piezoelectric actuator, in particular its piezoelectric layer. Preferably, all piezoelectric actuators of the respective bending cantilever 3, 4 have a common piezoelectric layer on which electrically separated electrical electrodes are arranged to form the piezoelectric actuators. The bending segments 7 shown in Fig. 1 then correspond to the separated electrodes of the piezoelectric actuators on the respective bending cantilever 3, 4. Usually, the respective first electrodes of the piezoelectric actuators are designed as such separated electrodes. Second electrodes of the piezoelectric actuators corresponding to the first electrode can be designed as a common electrode.

The first bending cantilever 3 and the second bending cantilever 4 usually each have an arrangement row 11 with several bending segments 7 arranged in a row in the longitudinal direction of the respective bending cantilever. Preferably, the bending segments 7 are each strip-shaped with a longitudinal direction along the longitudinal extension of the respective bending cantilever. Each bending segment 7 is deformed by one of the actuators 6. The arrangement row 11 can extend over a major part, preferably substantially an entire longitudinal extent, of the respective bending cantilever 3, 4.

Preferably, the first bending cantilever 3 and the second bending cantilever 4 each have a bending segment 7 in each of the quadrants, which are defined by a first arrangement axis A1 and a second arrangement axis A2 orthogonal to the first arrangement axis A1, the arrangement axes running through the mirror 2 center, on at least one, preferably several, in particular all, portions of the bending cantilever 3, 4, which run through the respective quadrant. The bending segments 7 are usually different bending segments 7 which can be deformed separately from each other with the actuators 6. The bending segments 7 in the respective quadrant are usually designed to overlap one another in the radial direction of the mirror 2. The first arrangement axis A1 can be arranged in such a way that it passes through the second ends 10 of the two bending cantilevers 3, 4. In the case of a four-sided mirror 2, the arrangement axis may be arranged such that one of the quadrants is arranged on each of the sides of the mirror 2, as shown in Fig. 1. The arrangement axes may, for example, be formed by diagonals of the mirror 2. The respective bending segment 7 extends at the respective portion of the bending cantilever 3, 4 in longitudinal direction of the portion preferably substantially along a major part, in particular substantially an entirety, of a longitudinal extension of the portion.

Typically, the mirror 2 is movable by activating different sets of bending segments 7, with different types of movement, in particular into different types of adjustment positions of the mirror 2. The actuators 6 of the bending segments 7 of the respective set can be electrically connected to each other, for example via common electrical control lines, in order to control the actuators 6 with the same control signal.

On the holder 5, electrical connection ports 12 are usually arranged in order to apply control signals, in particular electrical control voltages, to the micromirror 2 device 1 via the connection ports 12 for controlling the actuators 6. Each of the actuators 6 is electrically connected to one of the connection ports 12 via electrical control lines to transmit the control signal. The connection port 12 may have an electrical contact surface 8 which can be electrically contacted to transmit the electrical control signal.

Fig. 2 shows a schematic illustration of a further micromirror device 1, which is not covered by the subject-matter of the claims, for quasi-static mirror movement in a top view of the micromirror device 1. The micromirror device 1 can be designed analogously to the micromirror device 1 of Fig. 1. In contrast to the micromirror device 1 of Fig. 1, the first bending cantilever 3 and the second bending cantilever 4 are each formed as corner-free, in particular substantially circular or elliptical, spirals. Preferably, the mirror 2 is then also corner-free, in particular circular or elliptical. This enables a high fill factor to be achieved.

The first bending cantilever 3 and the second bending cantilever 4 can each have in top-view in the width direction of the bending cantilever 3, 4 two arrangement rows 11 with multiple bending segments 7 arranged in a row in the longitudinal direction of the respective bending cantilever 3, 4. Although a single arrangement row 11 can be sufficient, analogous to Fig. 1, several arrangement rows 11 may be advantageous, especially in the case of corner-free spirals. In an analogous manner, the bending cantilevers 3, 4 of Fig. 1 can have several arrangement rows 11. The arrangement rows 11 or an arrangement of the bending segments 7 can be designed analogously as described for Fig. 1.

In an analogous manner as described for Fig. 1, the first bending cantilever 3 and the second bending cantilever 4 each have a bending segment 7 in each of the quadrants, which are defined by a first arrangement axis A1 and a second arrangement axis A2 orthogonal to the first arrangement axis A1, the arrangement axes running through the mirror 2 center, on at least one, preferably several, in particular all, sections of the bending cantilever 3, 4, which run through the respective quadrant. The bending segments 7 in the respective quadrant are usually designed to overlap with each other in the radial direction of the mirror 2.

The respective mirror 2 of the micromirror 2 devices 1 of Fig. 1 and Fig. 2 can be moved differently by activating different sets of bending segments 7 of the first bending cantilever 3 and second bending cantilever 4.

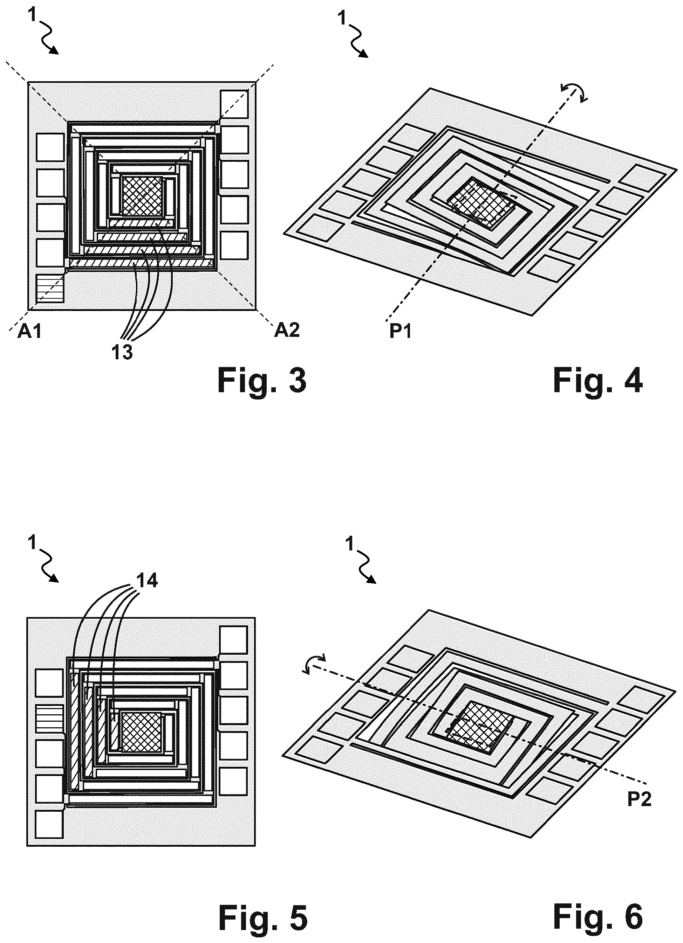

Fig. 3 and Fig. 4 show schematic illustrations of the micromirror 2 device 1 of Fig. 1, where Fig. 4 shows a pivoting of the mirror 2 about a first pivot axis and Fig. 3 shows an activation of a corresponding first set 13 of bending segments 7 of the first bending cantilever 3 and second bending cantilever 4. The first set 13 comprises multiple bending segments 7 of parts of the first bending cantilever 3 and second bending cantilever 4 overlapping each other in a first quadrant of the quadrants in the radial direction of the mirror 2, wherein the bending segments 7 are arranged overlapping each other in the radial direction. The actuators 6 of the bending segments 7 of the first set 13 are electrically connected via common control lines to a first control port 12 of the control ports 12 to control them with a same control signal. Another control connection usually functions as an electrical ground connection for controlling the actuators 6.

Fig. 5 and Fig. 6 show schematic illustrations of the micromirror device 1 of Fig. 1, where Fig. 6 shows a pivoting of the mirror 2 about a second pivot axis P2 and Fig. 5 shows an activation of a corresponding second set 14 of bending segments 7 of the first bending cantilever 3 and second bending cantilever 4. The second set 14 comprises multiple bending segments 7 of parts of the first bending cantilever 3 and second bending cantilever 4 overlapping each other in a first quadrant of the quadrants in the radial direction of the mirror 2, wherein the bending segments 7 are arranged overlapping each other in the radial direction. The second quadrant is an immediately adjacent quadrant of the first quadrant in a direction circulating around the mirror 2. The actuators 6 of the bending segments 7 of the second set 14 are electrically connected via common control lines to a second control port 12 of the control ports 12 to control them with a same control signal.

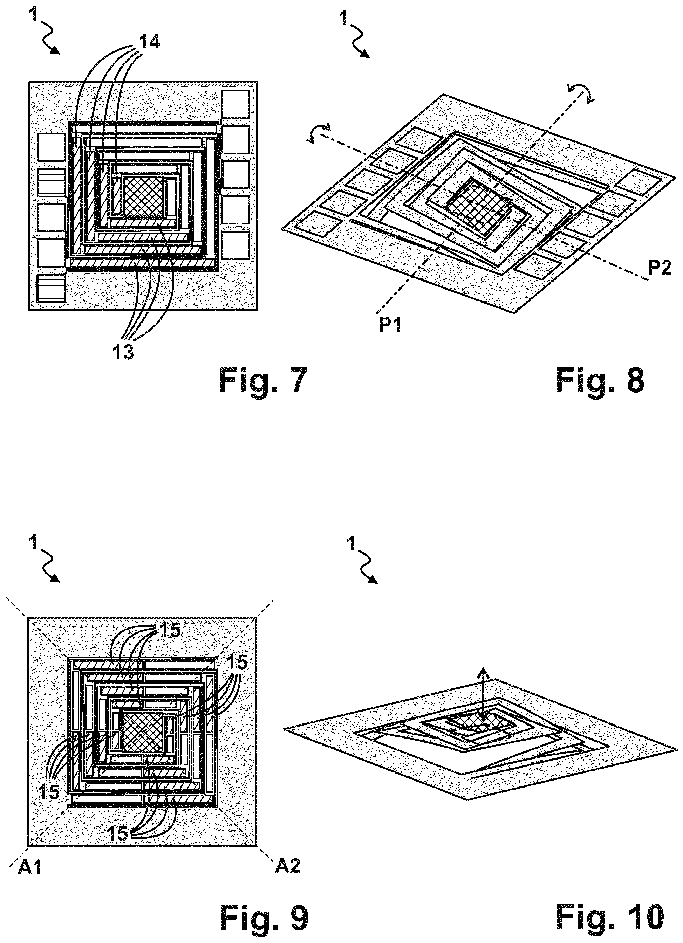

Fig. 7 and Fig. 8 show schematic illustrations of the micromirror device 1 of Fig. 1, where Fig. 8 shows a pivoting of the mirror 2 about the first pivot axis P1 and the second pivot axis P2 and Fig. 7 shows an activation of corresponding sets 13, 14 of bending segments 7 of the first bending cantilever 3 and second bending cantilever 4. A pivoting about the first pivot axis P1 can be done corresponding to Fig. 3 and Fig. 4 by activation of the actuators 6 of the first set 13 and a pivoting about the second pivot axis P2 corresponding to Fig. 5 and Fig. 6 by activation of the actuators 6 of the second set 14.

Fig. 9 and Fig. 10 show schematic illustrations of a further micromirror device 1. The micromirror device 1 of Fig. 9 and Fig. 10 can be designed analogously to the micromirror device 1 of Fig. 1. The first bending cantilever 3 and the second bending cantilever 4 of the micromirror device 1 have in each of the quadrants, at an angle bisector between the first arrangement axis A1 and the second arrangement axis A2, which angle bisector divides the respective quadrant into a first half and a second half, a respective bending segment 7 in the first half on each portion of the respective bending cantilever passing through the first half, wherein preferably the bending segment 7 substantially does not extend beyond the first half in the longitudinal direction of the portion. Preferably, the respective bending segment 7 extends substantially along an entirety of the longitudinal extent of the respective portion in the first half. In the circumferential direction around the mirror 2, the first halves and second halves are typically arranged alternately. By activating the actuators 6 of the bending segments 7 of the first halves, a translational movement of the mirror 2 in a direction orthogonal to the mirror 2 surface 8 can be implemented. The corresponding bending segments 7 can form a third set 15.

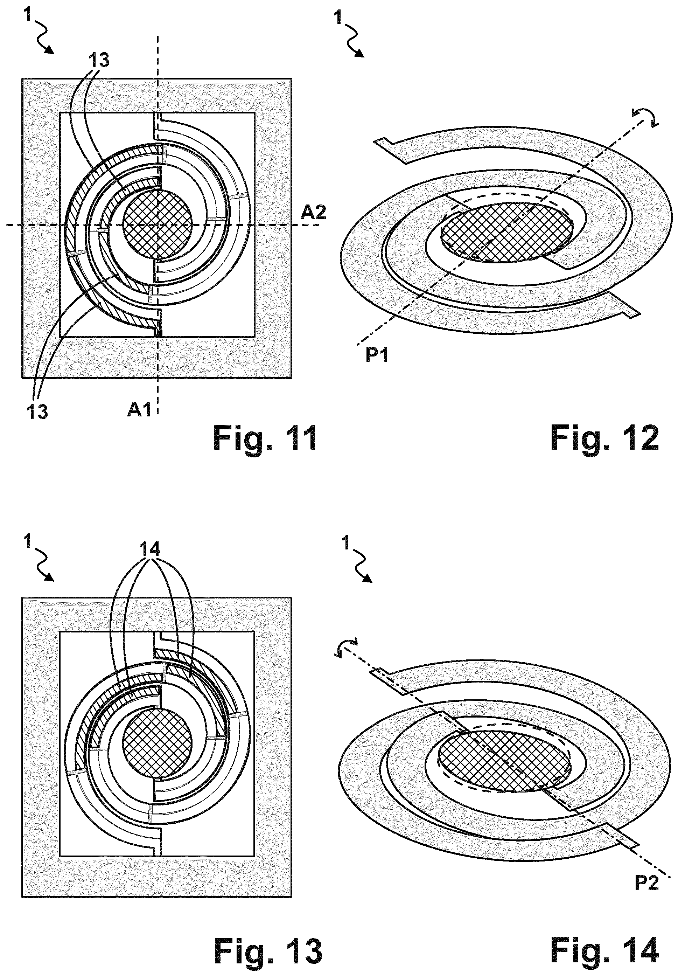

Fig. 11 and Fig. 12 show schematic illustrations of the micromirror device 1 of Fig. 2, where Fig. 12 shows a pivoting of the mirror 2 about a first pivot axis P1 and Fig. 11 shows an activation of a corresponding first set 13 of bending segments 7 of the first bending cantilever 3 and second bending cantilever 4. The first set 13 comprises, in the two quadrants located on one of the halves defined by the first arrangement axis A1, one bending segment 7 of the first bending cantilever 3 and one bending segment 7 of the second bending cantilever 4 in each of the two quadrants, wherein preferably the respective bending segment 7 extends in the longitudinal direction of the respective bending cantilever along substantially the entire respective quadrant. At the respective bending cantilever, the bending segments 7 each belong to one of the arrangement rows 11, wherein the arrangement rows 11 on radially overlapping portions of the bending cantilevers are preferably mutually opposing ones of the arrangement rows 11. For better visibility, in Fig. 12, Fig. 14, Fig. 16 and Fig. 18 the micromirror 2 is shown without the holder 5.

Fig. 12 and Fig. 13 show schematic illustrations of the micromirror device 1 of Fig. 2, where Fig. 13 shows a pivoting of the mirror 2 about a first pivot axis P1 and Fig. 12 shows an activation of a corresponding second set 14 of bending segments 7 of the first bending cantilever 3 and second bending cantilever 4. The second set 14 comprises, in the two quadrants which are located on one of the halves defined by the second arrangement axis A2, in each of the two quadrants a bending segment 7 of the first bending cantilever 3 and a bending segment 7 of the second bending cantilever 4, wherein preferably the respective bending segment 7 extends in longitudinal direction of the respective bending cantilever along substantially the entire respective quadrant. On the respective bending cantilever, bending segments 7 of one of the arrangement rows 11 each are preferably used, wherein the arrangement rows 11 on in radial direction of the mirror 2 overlapping portions of the bending cantilevers are preferably facing each other ones of the arrangement rows 11.

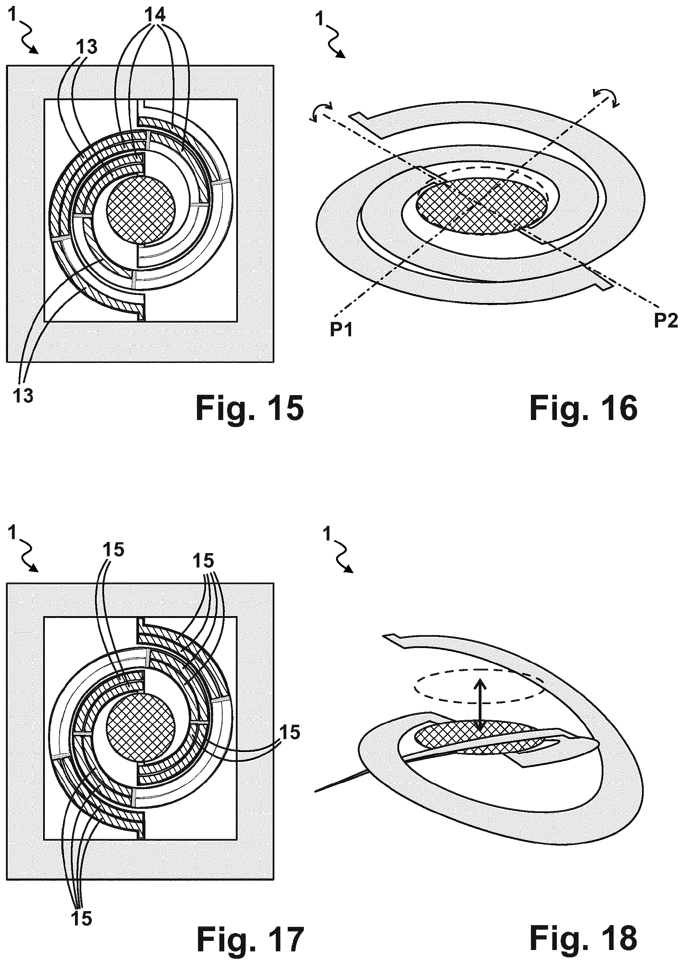

Fig. 15 and Fig. 16 show schematic illustrations of the micromirror device 1 of Fig. 2, where Fig. 16 shows a pivoting of the mirror 2 about the first pivot axis P1 and the second pivot axis P2 and Fig. 15 shows an activation of corresponding sets of bending segments 7 of the first bending cantilever 3 and second bending cantilever 4. A pivoting about the first pivot axis P1 can be done corresponding to Fig. 11 and Fig. 12 with activation of the actuators 6 of the first set 13 and a pivoting about the second pivot axis P2 corresponding to Fig. 13 and Fig. 14 by activation of the actuators 6 of the second set 14.

Fig. 17 and Fig. 18 show schematic illustrations of the micromirror device 1 of Fig. 2, where Fig. 18 shows a translational movement of the mirror 2 in a direction orthogonal to the mirror surface 8 and Fig. 17 shows an activation of a corresponding third set 15 of bending segments 7 of the first bending cantilever 3 and second bending cantilever 4. The third set 15 comprises in two diagonally opposite quadrants of the quadrants respectively a least one bending segment 7 on the first bending cantilever 3 and at least one bending segment 7 on the second bending cantilever 4. Further, the third set 15 comprises at least one bending segment 7 on the first bending cantilever 3 in one of the quadrants of the two other diagonally opposite quadrants and at least one bending segment 7 on the second bending cantilever 4 in the other quadrant of the two other diagonally opposite quadrants. Preferably, the at least one bending segment 7 can be implemented by one bending segment 7 of each of the several arrangement rows 11 on the respective bending cantilever. Preferably, the respective bending segment 7 extends in longitudinal direction of the respective bending cantilever along substantially the entire respective quadrant.

In this way, if the mirror 2 is circumferentially enclosed by the bending cantilevers 3, 4, with the bending cantilevers 3, 4 overlapping each other at least in sections in a radial direction of the mirror 2, preferably by the bending cantilevers 3, 4 forming interlocking spirals, a reduced surface 8 area and a pronounced deflection angle of the mirror 2 can be achieved.

## Claims

1. Micromirror device (1) for quasi-static mirror movement, comprising a mirror (2), a first bending cantilever (3) and a second bending cantilever (4), the bending cantilevers (3, 4) each connecting the mirror (2) to a holder (5) for moving, in particular pivoting, the mirror (2) relative to the holder (5) by elastic deformation of the bending cantilevers, wherein each of the bending cantilevers (3, 4) is mechanically coupled to one or more actuators (6), each of the actuators (6) defining a bending segment (7) on the respective bending cantilever, which bending segment (7) is elastically deformable with the respective actuator (6) upon activation of the actuator (6), wherein in top view of the mirror (2), the first bending cantilever (3) and second bending cantilever (4) each run at least in sections along a circumference around the mirror (2) so that the mirror (2) is circumferentially enclosed by the two bending cantilevers (3, 4), wherein in top view of the mirror (2) the first bending cantilever (3) and the second bending cantilever (4) each run spirally around the mirror at least in sections, wherein in a radial direction of the mirror (2) the first bending cantilever (3) and the second bending cantilever (4) overlap each other at least in sections, **characterized in that**, in top view of the mirror (2), the first bending cantilever (3) and the second bending cantilever (4) each run around the mirror (2) at least one and a half times, wherein the bending segments (7) are arranged such that one or more of the bending segments (7) of one of the bending cantilevers (3, 4) overlap with one or more bending segment (7) of the other bending cantilever (3, 4) in a radial direction of the mirror (2).

2. Micromirror device (1) according to claim 1, wherein the first bending cantilever (3) and second bending cantilever (4) forming intertwined spirals.

3. Micromirror device (1) according to claim 1 or 2, wherein in top view, the first bending cantilever (3) and/or the second bending cantilever (4) each run around the mirror (2) multiple times.

4. Micromirror device (1) according to any one of the claims 1 to 3, wherein in top view, the bending cantilevers (3, 4) are connected to the mirror (2) at different points of the mirror (2), in particular opposite to each other on the mirror (2).

5. Micromirror device (1) according to any one of the claims 1 to 4, wherein the actuators (6) are each formed with a piezoelectric element in order to elastically deform the respective bending segment (7) with the piezoelectric element of the respective actuator (6).

6. Micromirror device (1) according to claim 5, wherein multiple of the actuators (6) have a common piezoelectric layer on which electrical electrodes separated from each other are disposed to form the respective piezoelectric element.

7. Micromirror device (1) according to any one of the claims 1 to 6, wherein the first bending cantilever (3) and/or the second bending cantilever (4) each have multiple, preferably strip-shaped, bending segments (7) arranged along a longitudinal direction of the respective bending cantilever (3, 4) around the mirror (2).

8. Micromirror device (1) according to any one of the claims 1 to 7, wherein in top view of the mirror (2), at least one bending segment (7) is arranged on the first bending cantilever (3) and/or the second bending cantilever (4) in each quadrant defined by a first arrangement axis (A1) and a second arrangement axis (A2) orthogonal to the first arrangement axis (A1), the arrangement axes running through the center of the mirror (2).

9. Micromirror device (1) according to any one of the claims 1 to 8, wherein multiple sets of bending segments (7) are provided, wherein each set comprises at least one bending segment (7) of the first bending cantilever (3) and at least one bending segment (7) of the second bending cantilever (4), wherein the mirror (2) can be pivoted about different, in particular mutually orthogonal, pivot axes (P1, P1) by activating the actuators (6) of the bending segments (7) of different sets.

10. Micromirror device (1) according to claim 9, wherein the bending segments (7) of the respective set overlap each other in a radial direction of the mirror (2).

11. Micromirror device (1) according to any one of the claims 1 to 10, wherein the first bending cantilever (3) and/or the second bending cantilever (4) each has at least one portion which has a plurality of bending segments (7) in the radial direction of the mirror (2).

12. Method of operating a micromirror device (1) for quasi-static mirror movement, wherein the micromirror device (1) comprises a mirror (2), a first bending cantilever (3) and a second bending cantilever (4), the bending cantilevers (3, 4) each connecting the mirror (2) to a holder (5) for moving, in particular pivoting, the mirror (2) relative to the holder (5) by elastic deformation of the bending cantilevers (3, 4), wherein each of the bending cantilevers (3, 4) is mechanically coupled to one or more actuators (6), each of the actuators (6) defining a bending segment (7) on the respective bending cantilever (3, 4), which bending segment (7) is elastically deformable with the respective actuator (6) upon activation of the actuator (6), wherein in top view of the mirror (2), the first bending cantilever (3) and second bending cantilever (4) each run at least in sections along a circumference around the mirror (2) so that the mirror (2) is circumferentially enclosed by the two bending cantilevers (3, 4), wherein the first bending cantilever (3) and the second bending cantilever (4) each run spirally around the mirror at least in sections, wherein in a radial direction of the mirror (2) the first bending cantilever (3) and the second bending cantilever (4) overlap each other at least in sections, **characterized in that**, in top view of the mirror (2), the first bending cantilever (3) and the second bending cantilever (4) each run around the mirror (2) at least one and a half times, wherein the bending segments (7) are arranged such that, one or more of the bending segments (7) of one of the bending cantilevers (3, 4) overlap with one or more bending segment (7) of the other bending cantilever (3, 4) in a radial direction of the mirror (2), wherein at least one bending segment (7) of the first bending cantilever (3) and at least one bending segment (7) of the second bending cantilever (4) are elastically deformed by activation of the respective actuator (6) in order to move, in particular to pivot and/or translational displace, the mirror (2).

13. Method according to claim 12, wherein the bending segments (7) are arranged such that in radial direction of the mirror (2) one or more of the bending segments (7) of the first bending cantilevers (3) overlaps with at least one or more bending segments (7) of the second bending cantilever (4), wherein the actuators (6) of the overlapping bending segments (7) are activated time-parallel to move the mirror (2).

14. Method according to claim 12 or 13, wherein multiple sets of bending segments (7) are provided, each set comprising one or more bending segments (7) of the first bending cantilever (3) and one or more bending segments (7) of the second bending cantilever (4), wherein by activating the actuators (6) of the bending segments (7) of different sets the mirror (2) is pivoted about different, in particular mutually orthogonal, pivot axes (P1, P2).

## Patentansprüche

1. Mikrospiegelvorrichtung (1) für eine quasistatische Spiegelbewegung, umfassend einen Spiegel (2), einen ersten Biegeausleger (3) und einen zweiten Biegeausleger (4), wobei die Biegeausleger (3, 4) jeweils den Spiegel (2) mit einer Halterung (5) verbinden, zum Bewegen, insbesondere Schwenken, des Spiegels (2) im Verhältnis zu der Halterung (5) durch elastische Verformung der Biegeausleger, wobei jeder von den Biegeauslegern (3, 4) mechanisch an einen oder mehrere Stellantriebe (6) gekoppelt ist, wobei jeder von den Stellantrieben (6) ein Biegesegment (7) an dem jeweiligen Biegeausleger definiert, wobei das Biegesegment (7) mit dem jeweiligen Stellantrieb (6) auf eine Aktivierung des Stellantriebes (6) hin elastisch verformbar ist, wobei in einer Draufsicht des Spiegels (2) der erste Biegeausleger (3) und der zweite Biegeausleger (4) jeweils zumindest in Sektionen entlang eines Umfangs um den Spiegel (2) verlaufen, so dass der Spiegel (2) in Umfangsrichtung durch die zwei Biegeausleger (3, 4) umschlossen ist, wobei in einer Draufsicht des Spiegels (2) der erste Biegeausleger (3) und der zweite Biegeausleger (4) jeweils zumindest in Sektionen spiralförmig um den Spiegel verlaufen, wobei in einer Radialrichtung des Spiegels (2) der erste Biegeausleger (3) und der zweite Biegeausleger (4) einander zumindest in Sektionen überlappen, **dadurch gekennzeichnet, dass**, in einer Draufsicht des Spiegels (2), der erste Biegeausleger (3) und der zweite Biegeausleger (4) jeweils zumindest anderthalb Male um den Spiegel (2) verlaufen, wobei die Biegesegmente (7) derart angeordnet sind, dass sich eines oder mehrere von den Biegesegmenten (7) eines von den Biegeauslegern (3, 4) mit einem oder mehreren Biegesegmenten (7) des anderen Biegeauslegers (3, 4) in einer Radialrichtung des Spiegels (2) überlappen.

2. Mikrospiegelvorrichtung (1) nach Anspruch 1, wobei der erste Biegeausleger (3) und der zweite Biegeausleger (4) ineinander verschlungene Spiralen bilden.

3. Mikrospiegelvorrichtung (1) nach Anspruch 1 oder 2, wobei, in einer Draufsicht, der erste Biegeausleger (3) und/oder der zweite Biegeausleger (4) jeweils mehrere Male um den Spiegel (2) verlaufen.

4. Mikrospiegelvorrichtung (1) nach einem der Ansprüche 1 bis 3, wobei, in einer Draufsicht, die Biegeausleger (3, 4) an unterschiedlichen Punkten des Spiegels (2), insbesondere einander an dem Spiegel (2) gegenüberliegend, mit dem Spiegel (2) verbunden sind.

5. Mikrospiegelvorrichtung (1) nach einem der Ansprüche 1 bis 4, wobei die Stellantriebe (6) jeweils mit einem piezoelektrischen Element geformt sind, um das jeweilige Biegesegment (7) mit dem piezoelektrischen Element des jeweiligen Stellantriebes (6) elastisch zu verformen.

6. Mikrospiegelvorrichtung (1) nach Anspruch 5, wobei mehrere von den Stellantrieben (6) eine gemeinsame piezoelektrische Schicht aufweisen, auf der elektrische Elektroden, die voneinander getrennt sind, angeordnet sind, um das jeweilige piezoelektrische Element zu bilden.

7. Mikrospiegelvorrichtung (1) nach einem der Ansprüche 1 bis 6, wobei der erste Biegeausleger (3) und/oder der zweite Biegeausleger (4) jeweils mehrere, vorzugsweise streifenförmige, Biegesegmente (7) aufweisen, die entlang einer Längsrichtung des jeweiligen Biegeauslegers (3, 4) um den Spiegel (2) angeordnet sind.

8. Mikrospiegelvorrichtung (1) nach einem der Ansprüche 1 bis 7, wobei in einer Draufsicht des Spiegels (2) mindestens ein Biegesegment (7) an dem ersten Biegeausleger (3) und/oder dem zweiten Biegeausleger (4) in jedem Quadranten angeordnet ist, der durch eine erste Anordnungsachse (A1) und eine zweite Anordnungsachse (A2), senkrecht zu der ersten Anordnungsachse (A1), definiert wird, wobei die Anordnungsachsen durch die Mitte des Spiegels (2) verlaufen.

9. Mikrospiegelvorrichtung (1) nach einem der Ansprüche 1 bis 8, wobei mehrere Sätze von Biegesegmenten (7) bereitgestellt werden, wobei jeder Satz mindestens ein Biegesegment (7) des ersten Biegeauslegers (3) und mindestens ein Biegesegment (7) des zweiten Biegeauslegers (4) umfasst, wobei der Spiegel (2) durch Aktivieren der Stellantriebe (6) der Biegesegmente (7) unterschiedlicher Sätze um unterschiedliche, insbesondere wechselseitig senkrechte, Schwenkachsen (P1, P1) geschwenkt werden kann.

10. Mikrospiegelvorrichtung (1) nach Anspruch 9, wobei die Biegesegmente (7) des jeweiligen Satzes einander in einer Radialrichtung des Spiegels (2) überlappen.

11. Mikrospiegelvorrichtung (1) nach einem der Ansprüche 1 bis 10, wobei der erste Biegeausleger (3) und/oder der zweite Biegeausleger (4) jeweils mindestens einen Abschnitt aufweisen, der eine Vielzahl von Biegesegmenten (7) in der Radialrichtung des Spiegels (2) aufweist.

12. Verfahren zum Betreiben einer Mikrospiegelvorrichtung (1) für eine quasistatische Spiegelbewegung, wobei die Mikrospiegelvorrichtung (1) einen Spiegel (2), einen ersten Biegeausleger (3) und einen zweiten Biegeausleger (4) umfasst, wobei die Biegeausleger (3, 4) jeweils den Spiegel (2) mit einer Halterung (5) verbinden, zum Bewegen, insbesondere Schwenken, des Spiegels (2) im Verhältnis zu der Halterung (5) durch elastische Verformung der Biegeausleger (3, 4), wobei jeder von den Biegeauslegern (3, 4) mechanisch an einen oder mehrere Stellantriebe (6) gekoppelt ist, wobei jeder von den Stellantrieben (6) ein Biegesegment (7) an dem jeweiligen Biegeausleger (3, 4) definiert, wobei das Biegesegment (7) mit dem jeweiligen Stellantrieb (6) auf eine Aktivierung des Stellantriebes (6) hin elastisch verformbar ist, wobei in einer Draufsicht des Spiegels (2) der erste Biegeausleger (3) und der zweite Biegeausleger (4) jeweils zumindest in Sektionen entlang eines Umfangs um den Spiegel (2) verlaufen, so dass der Spiegel (2) in Umfangsrichtung durch die zwei Biegeausleger (3, 4) umschlossen ist, wobei der erste Biegeausleger (3) und der zweite Biegeausleger (4) jeweils zumindest in Sektionen spiralförmig um den Spiegel verlaufen, wobei in einer Radialrichtung des Spiegels (2) der erste Biegeausleger (3) und der zweite Biegeausleger (4) einander zumindest in Sektionen überlappen, **dadurch gekennzeichnet, dass**, in einer Draufsicht des Spiegels (2), der erste Biegeausleger (3) und der zweite Biegeausleger (4) jeweils zumindest anderthalb Male um den Spiegel (2) verlaufen, wobei die Biegesegmente (7) derart angeordnet sind, dass sich eines oder mehrere von den Biegesegmenten (7) eines von den Biegeauslegern (3, 4) mit einem oder mehreren Biegesegmenten (7) des anderen Biegeauslegers (3, 4) in einer Radialrichtung des Spiegels (2) überlappen, wobei mindestens ein Biegesegment (7) des ersten Biegeauslegers (3) und mindestens ein Biegesegment (7) des zweiten Biegeauslegers (4) durch eine Aktivierung des jeweiligen Stellantriebs (6) elastisch verformt werden, um den Spiegel (2) zu bewegen, insbesondere zu schwenken und/oder translatorisch zu verschieben.

13. Verfahren nach Anspruch 12, wobei die Biegesegmente (7) derart angeordnet sind, dass sich in einer Radialrichtung des Spiegels (2) eines oder mehrere von den Biegesegmenten (7) der ersten Biegeausleger (3) mit mindestens einem oder mehreren Biegesegmenten (7) des zweiten Biegeauslegers (4) überlappt, wobei die Stellantriebe (6) der überlappenden Biegesegmente (7) zeitlich parallel aktiviert werden, um den Spiegel (2) zu bewegen.

14. Verfahren nach Anspruch 12 oder 13, wobei mehrere Sätze von Biegesegmenten (7) bereitgestellt werden, wobei jeder Satz ein oder mehrere Biegesegmente (7) des ersten Biegeauslegers (3) und ein oder mehrere Biegesegmente (7) des zweiten Biegeauslegers (4) umfasst, wobei durch Aktivieren der Stellantriebe (6) der Biegesegmente (7) unterschiedlicher Sätze der Spiegel (2) um unterschiedliche, insbesondere wechselseitig senkrechte, Schwenkachsen (P1, P2) geschwenkt wird.

## Revendications

1. Dispositif à micromiroirs (1) pour un mouvement de miroir quasi-statique comprenant un miroir (2), un premier cantilever de courbure (3) et un deuxième cantilever de courbure (4), les cantilevers de courbure (3, 4) connectant chacun le miroir (2) à un support (5) pour déplacer, en particulier pour faire pivoter, le miroir (2) par rapport au support (5) par déformation élastique des cantilevers de courbure, dans lequel chacun des cantilevers de courbure (3, 4) est couplé mécaniquement à un ou plusieurs actionneurs (6), chacun des actionneurs (6) définissant un segment de courbure (7) sur le cantilever de courbure respectif, ledit segment de courbure (7) étant élastiquement déformable par l'actionneur respectif (6) lors de l'activation de l'actionneur (6), dans lequel, en vue de dessus du miroir (2), le premier cantilever de courbure (3) et le deuxième cantilever de courbure (4) s'enroulent chacun autour du miroir (2) au moins par sections le long d'une circonférence de sorte que le miroir (2) soit circonférentiellement entouré par les deux cantilevers de courbure (3, 4), dans lequel, en vue de dessus du miroir (2), le premier cantilever de courbure (3) et le deuxième cantilever de courbure (4) s'enroulent chacun en spirale au moins par sections autour du miroir, dans lequel, en direction radiale du miroir (2), le premier cantilever de courbure (3) et le deuxième cantilever de courbure (4) se chevauchent au moins par sections, **caractérisé en ce que**, en vue de dessus du miroir (2), le premier cantilever de courbure (3) et le deuxième cantilever de courbure (4) s'enroulent chacun au moins une fois et demie autour du miroir (2), dans lequel les segments de courbure (7) sont agencés de telle sorte qu'un ou plusieurs des segments de courbure (7) de l'un des cantilevers de courbure (3, 4) chevauchent un ou plusieurs segments de courbure (7) de l'autre cantilever de courbure (3, 4) en direction radiale du miroir (2).

2. Dispositif à micromiroirs (1) selon la revendication 1 dans lequel le premier cantilever de courbure (3) et le deuxième cantilever de courbure (4) forment des spirales entrelacées.

3. Dispositif à micromiroirs (1) selon la revendication 1 ou 2 dans lequel, en vue de dessus, le premier cantilever de courbure (3) et/ou le deuxième cantilever de courbure (4) s'enroulent chacun plusieurs fois autour du miroir (2).

4. Dispositif à micromiroirs (1) selon l'une quelconque des revendications 1 à 3 dans lequel, en vue de dessus, les cantilevers de courbure (3, 4) sont connectés au miroir (2) en différents points du miroir (2), en particulier en des points opposés du miroir (2).

5. Dispositif à micromiroirs (1) selon l'une quelconque des revendications 1 à 4 dans lequel les actionneurs (6) sont constitués chacun d'un élément piézoélectrique afin de déformer élastiquement le segment de courbure respectif (7) avec l'élément piézoélectrique de l'actionneur respectif (6).

6. Dispositif à micromiroirs (1) selon la revendication 5 dans lequel de multiples dits actionneurs (6) ont une couche piézoélectrique commune sur laquelle des électrodes électriques séparées les unes des autres sont disposées pour former l'élément piézoélectrique respectif.

7. Dispositif à micromiroirs (1) selon l'une quelconque des revendications 1 à 6 dans lequel le premier cantilever de courbure (3) et/ou le deuxième cantilever de courbure (4) ont chacun de multiples segments de courbure (7), de préférence en forme de bande, agencés en direction longitudinale du cantilever de courbure respectif (3, 4) autour du miroir (2).

8. Dispositif à micromiroirs (1) selon l'une quelconque des revendications 1 à 7 dans lequel, en vue de dessus du miroir (2), au moins un segment de courbure (7) est agencé sur le premier cantilever de courbure (3) et/ou le deuxième cantilever de courbure (4) dans chaque quadrant défini par un premier axe d'agencement (A1) et un deuxième axe d'agencement (A2) orthogonal au premier axe d'agencement (A1), les axes d'agencement traversant le centre du miroir (2).

9. Dispositif à micromiroirs (1) selon l'une quelconque des revendications 1 à 8 dans lequel sont pourvus de multiples ensembles de segments de courbure (7), dans lequel chaque ensemble comprend au moins un segment de courbure (7) du premier cantilever de courbure (3) et au moins un segment de courbure (7) du deuxième cantilever de courbure (4), dans lequel le miroir (2) peut être pivoté autour de différents axes de pivotement (P1, P2), en particulier d'axes mutuellement orthogonaux, en activant les actionneurs (6) des segments de courbure (7) de différents ensembles.

10. Dispositif à micromiroirs (1) selon la revendication 9 dans lequel les segments de courbure (7) de l'ensemble respectif se chevauchent en direction radiale du miroir (2).

11. Dispositif à micromiroirs (1) selon l'une quelconque des revendications 1 à 10 dans lequel le premier cantilever de courbure (3) et/ou le deuxième cantilever de courbure (4) ont chacun au moins une portion qui comporte une pluralité de segments de courbure (7) en direction radiale du miroir (2).

12. Procédé de fonctionnement d'un dispositif à micromiroirs (1) pour un mouvement de miroir quasi-statique, dans lequel le dispositif à micromiroirs (1) comprend un miroir (2), un premier cantilever de courbure (3) et un deuxième cantilever de courbure (4), les cantilevers de courbure (3, 4) connectant chacun le miroir (2) à un support (5) pour déplacer le miroir (2), en particulier pour le faire pivoter, par rapport au support (5) par déformation élastique des cantilevers de courbure (3, 4), dans lequel chacun des cantilevers de courbure (3, 4) est couplé mécaniquement à un ou plusieurs actionneurs (6), chacun des actionneurs (6) définissant un segment de courbure (7) sur le cantilever de courbure respectif (3, 4), ledit segment de courbure (7) étant élastiquement déformable par l'actionneur respectif (6) lors de l'activation de l'actionneur (6), dans lequel, en vue de dessus du miroir (2), le premier cantilever de courbure (3) et le deuxième cantilever de courbure (4) s'enroulent chacun autour du miroir (2) au moins par sections le long d'une circonférence de sorte que le miroir (2) soit circonférentiellement entouré par les deux cantilevers de courbure (3, 4), dans lequel le premier cantilever de courbure (3) et le deuxième cantilever de courbure (4) s'enroulent chacun en spirale autour du miroir au moins par sections, dans lequel, en direction radiale du miroir (2), le premier cantilever de courbure (3) et le deuxième cantilever de courbure (4) se chevauchent au moins par sections, **caractérisé en ce que**, en vue de dessus du miroir (2), le premier cantilever de courbure (3) et le deuxième cantilever de courbure (4) s'enroulent chacun au moins une fois et demie autour du miroir (2), dans lequel les segments de courbure (7) sont agencés de telle sorte qu'un ou plusieurs des segments de courbure (7) de l'un des cantilevers de courbure (3, 4) chevauchent un ou plusieurs segments de courbure (7) de l'autre cantilever de courbure (3, 4) en direction radiale du miroir (2), dans lequel au moins un segment de courbure (7) du premier cantilever de courbure (3) et au moins un segment de courbure (7) du deuxième cantilever de courbure (4) sont déformés élastiquement par l'activation de l'actionneur respectif (6) afin de déplacer le miroir (2), en particulier afin de le faire pivoter et/ou de le déplacer par translation.

13. Procédé selon la revendication 12 dans lequel les segments de courbure (7) sont agencés de telle sorte qu'en direction radiale du miroir (2), un ou plusieurs des segments de courbure (7) des premiers cantilevers de courbure (3) chevauchent au moins un ou plusieurs segments de courbure (7) du deuxième cantilever de courbure (4), dans lequel les actionneurs (6) des segments de courbure superposés (7) sont activés parallèlement dans le temps pour déplacer le miroir (2).

14. Procédé selon la revendication 12 ou 13 dans lequel sont pourvus de multiples ensembles de segments de courbure (7), chaque ensemble comprenant un ou plusieurs segments de courbure (7) du premier cantilever de courbure (3) et un ou plusieurs segments de courbure (7) du deuxième cantilever de courbure (4), dans lequel, en activant les actionneurs (6) des segments de courbure (7) de différents ensembles, le miroir (2) pivote autour de différents axes de pivotement (P1, P2), en particulier d'axes mutuellement orthogonaux.
